# EUROPÄISCHE PATENTSCHRIFT

(11) **EP 4 281 679 B1**
(45) Veröffentlichungstag und Bekanntmachung des Hinweises auf die Patenterteilung: **12.02.2025**
(21) Anmeldenummer: 21830938.3
(22) Anmeldetag: 14.12.2021
(51) Int. Cl.: F16D 25/08

(54) **ABKOPPELVORRICHTUNG UND ABKOPPELSYSTEM**
DECOUPLING DEVICE AND DECOUPLING SYSTEM
DISPOSITIF DE DÉCOUPLAGE ET SYSTÈME DE DÉCOUPLAGE

(30) Priorität: 20.01.2021 DE 102021101141
(43) Veröffentlichungstag der Anmeldung: 29.11.2023
(73) Patentinhaber: Schaeffler Technologies AG & Co. KG, 91074 Herzogenaurach (DE)
(72) Erfinder: HEITBAUM, Markus, 77830 Bühlertal (DE); FRIETSCH, Frank, 77830 Bühlertal (DE)
(86) Internationale Anmeldenummer: PCT/DE2021/100996
(87) Internationale Veröffentlichungsnummer: WO 2022/156843

(56) Entgegenhaltungen:
- CN-A- 108 603 588
- DE-A1- 102008 011 898
- DE-A1- 102016 000 708
- DE-A1- 102019 100 397

## Beschreibung

Die Erfindung betrifft eine Vorrichtung zum Abkoppeln eines Motors von einem Antriebsstrang eines Kraftfahrzeugs, insbesondere eines Kraftfahrzeugs mit einer E-Achse. Derartige Vorrichtungen werden beispielsweise dafür eingesetzt, während der Fahrt das sogenannte "Segeln" zu ermöglichen, einen Fahrtmodus, bei dem ein Motor ausgeschaltet und von einem Antriebsstrang des Kraftfahrzeugs abgekoppelt ist. In diesem Modus wird die vorhandene Bewegungsenergie für den Vorschub des Fahrzeugs genutzt und Energieverluste über eine Schleppleistung vermieden werden. Bei Hybridfahrzeugen, also solche, die neben einem Verbrennungsmotor auch über einen Elektromotor für den Antrieb des Kraftfahrzeugs verfügen, ist der Modus des Segelns Teil des Antriebskonzepts, in den die Motorsteuerung automatisch wechseln kann.

Eine solche Abkoppelvorrichtung weist für gewöhnlich eine schaltbare Kupplung auf, welche durch einen hydraulischen Zylinder betätigt wird. Der Zylinder wird somit durch hydraulischen Druck in eine Abkopplungsposition gebracht und beispielsweise über eine Feder in seine Ausgangsposition zurückgebracht. Derartige Abkoppelvorrichtungen können prinzipiell im Zusammenhang mit Klauenkupplungen, Einscheibenkupplungen, Mehrscheibenkupplungen, Konuskupplungen, schaltbare Freiläufe sowie andere Arten von schaltbaren Kupplungen eingesetzt werden. Sie sind zudem sowohl für den Einsatz in einem Nassraum als auch in einem Trockenraum einer Kupplung geeignet.

Jedoch kann der Einsatz von Abkoppelvorrichtungen, welche wie vorstehend beschrieben durch eine mechanische Feder zurückgestellt werden, insbesondere bei niedrigem Druck, zu geringen und auch schwankenden Stellgeschwindigkeiten des Zylinders führen. Diese können beispielsweise von Schwankungen der Federkraft der mechanischen Feder, beispielsweise aufgrund von nicht vermeidbaren Toleranzen, herrühren. Aus der DE 10 2016 000708 Al ist eine Abkopelvorrichtung nach dem Oberbegriff des Anspruchs 1 bekannt. Weiterer Stand der Technik ist in der CN 108 603 588 A, der DE 10 2008 011898 A1 sowie der DE 10 2019 100397 A1 offenbart.

Es ist deshalb eine Aufgabe der Erfindung, eine hydraulische Abkoppelvorrichtung sowie ein diese enthaltendes Abkoppelsystem anzugeben, welche auch bei niedrigem Druck eine hohe und gleichzeitig konstante Stellgeschwindigkeit ermöglicht.

Diese Aufgabe wird erfindungsgemäß durch eine Abkoppelvorrichtung mit den Merkmalen des Anspruchs 1 gelöst. Vorteilhafte Ausgestaltungen sind in den Unteransprüchen angegeben.

Eine Abkoppelvorrichtung gemäß der Erfindung für die Trennung eines Motors von einem Antriebsstrang, weist einen Kolben auf, der in einem Gehäuse parallel zu einer Längsachse L des Gehäuses beweglich gelagert ist und der einen Arm zur mittelbaren oder unmittelbaren Betätigung eines Kupplungselements aufweist, wobei ein erster Bereich des Kolbens mit einem ersten Druckraum in so Wirkverbindung steht, dass bei Beaufschlagung des ersten Druckraums mit Druck der Kolben in eine erste Richtung parallel zur Längsachse L verschoben wird, wobei ein zweiter Druckraum vorhanden ist, welcher mit einem zweiten Bereich des Kolbens so in Wirkverbindung steht, dass bei Beaufschlagung des zweiten Druckraums mit Druck der Kolben in eine zweite Richtung parallel zur Längsachse L verschoben wird, welche der ersten Richtung entgegengesetzt ist.

Bei der Abkoppelvorrichtung kann jeder der Druckräume mit jeweils einem Druckanschluss ausgestattet sein.

Der Kolben der Abkoppelvorrichtung kann insbesondere als Ringkolben ausgebildet sein, welcher sich um die Längsachse L erstreckt.

Gemäß einer Ausführungsform der Abkoppelvorrichtung befindet sich der erste Bereich an einem ersten längsseitigen Ende des Kolbens und der zweite Bereich an einem zweiten längsseitigen Ende des Kolbens.

Bei der vorgenannten Ausführungsform ist der Arm in Bezug auf die Richtung der Längsachse L mittig am Kolben angebracht oder ausgeformt ist.

Gemäß der Abkoppelvorrichtung befindet sich der erste Bereich an einem ersten längsseitigen Ende des Kolbens und der zweite Bereich von einer Vertiefung in einer Mantelfläche des Kolbens gebildet wird.

Bei dieser Ausführungsform der ist die Vertiefung auf einer radial in Bezug auf die Längsachse L gesehen äußeren Hälfte der Mantelfläche des Kolbens ausgebildet.

Die Erfindung betrifft auch ein Abkoppelsystem, welches eine Abkoppelvorrichtung nach einer der vorstehenden Ausführungsformen aufweist, sowie ein erstes Kugellager, das radial innerhalb des Kolbens gelegen ist und auf dem der Arm des Kolbens gelagert ist.

Das Abkoppelsystem kann ferner eine Klaue aufweisen, auf der das erste Kugellager radial innen aufliegt und die dafür ausgelegt ist, mit einem freien Ende ein Kupplungselement zu betätigen.

Des Weiteren kann das Abkoppelsystem ein zweites Kugellager aufweisen, auf dem radial außen das Gehäuse abgestützt ist.

Die Erfindung wird nunmehr anhand von nicht beschränkenden Beispielen mit Bezug auf die beigefügte Zeichnung beschrieben. In der Zeichnung zeigen:
Fig. 1 eine Darstellung eines Abkoppelsystems nach dem Stand der Technik;
Fig. 2 eine erste Ausführungsform der Erfindung; und
Fig. 3 eine zweite Ausführungsform der Erfindung.

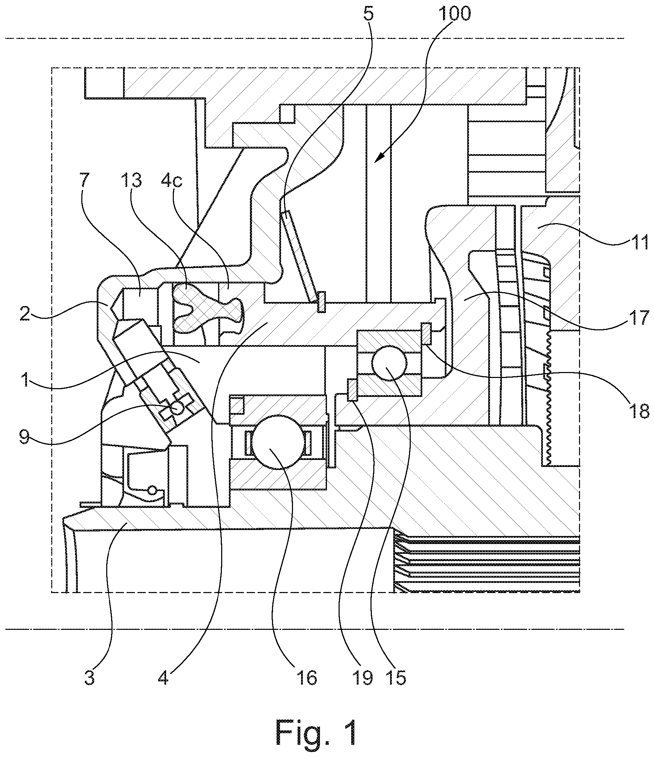

Mit Bezug auf Figur 1 wird nunmehr ein Abkoppelsystem 100 nach dem Stand der Technik beschrieben. Wie dies in der Figur zu erkennen ist, umfasst das Abkoppelsystem 100 ein Gehäuse 1 mit einem Gehäusedeckel 2, das auf einer Antriebswelle 3 gelagert ist. In dem Gehäuse 1 ist ein Kolben 4 so gelagert, dass er sich in Bezug auf eine Längsachse L des Abkoppelsystems 100, welche auch gleichzeitig die Längsachse L der Antriebswelle 3 ist, geradlinig parallel zu dieser bewegen kann.

Der Kolben 4 ist hier über ein erstes Kugellager 15 mit einer Klaue 17 verbunden, welche zur Betätigung eines Kupplungselements 11 dient. Wie dies zu erkennen ist, sind zur Sicherung des ersten Kugellagers 15 jeweils ein Sprengring 18, 19 zwischen das Kugellager 15 und den Kolben 4 bzw. zwischen das Kugellager 15 und die Klaue 17 gesetzt. Das Gehäuse 1 ist seinerseits über ein zweites Kugellager 16 auf der Antriebswelle 3 abgestützt. Ein erstes Ende 4c des Kolbens 4 steht über einen ersten Dichtring 13, der hier als Nutdichtring ausgeführt ist, mit einem ersten Druckraum 7 in Verbindung.

Bei der Betätigung des Abkoppelsystems 100 gemäß dem Stand der Technik wird über einen ersten Druckanschluss 9 ein Hydraulikfluid dem ersten Druckraum 7 zugeführt, wodurch das erste Ende 4c des Kolbens 4 mit Druck beaufschlagt wird und sich der Kolben parallel zur Längsachse L in der Figur nach rechts bewegt. Hierdurch wird das erste Kugellager 15 und damit Klaue 17, an die das erste Kugellager 15 radial innen in Bezug auf die Längsachse L gekoppelt ist, in der Längsbewegung mitgeführt. Bei dem Kugellager 15 kann es sich beispielsweise um ein Rillenkugellager handeln. Die Klaue 17 drückt dann auf einen Kupplungselement 11, beispielsweise eine feste Klaue, und betätigt dieses.

Zur Rückstellung des Kolbens 4 dient eine Feder 5, bei der es sich im gezeigten Bild um eine Druckfeder handelt. Diese wirkt so, dass der Kolben 4 in seine Ausgangsstellung im drucklosen Zustand zurückgedrängt wird.

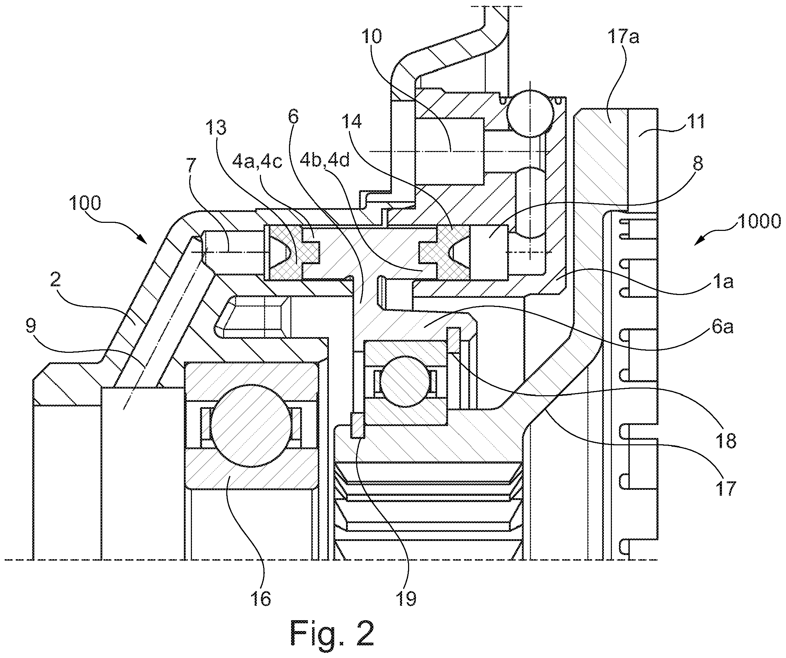

Mit nunmehrigem Bezug auf Figur 2 wird eine erste Ausführungsform der Erfindung beschrieben. Dabei sind gleiche oder entsprechende Elemente wie in Figur 1 mit den gleichen Bezugszeichen gekennzeichnet. Eine Lagerung des Gehäuses 1 auf der Antriebswelle 3 wird deshalb in der Beschreibung der Ausführungsformen der Erfindung nicht weiter eingegangen. Zusätzlich zu dem ersten Druckraum 7, welcher hier in den Gehäusedeckel 2 integriert ist und mit einem ersten Bereich 4a des Kolbens 4, hier mit dem ersten Ende 4c des Kolbens 4 in Wirkverbindung steht (hier über den ersten Dichtring 13), ist ein zweiter Druckraum 8 vorhanden, welcher beispielsweise in einen Gehäuseanbau 1a integriert ist. Der Gehäuseanbau 1a kann einstückig mit dem Gehäuse 1 ausgebildet sein oder an diesem befestigt sein. Der zweite Druckraum 8 befindet sich hier parallel in Achsrichtung zum ersten Druckraum 7 und hat denselben Querschnitt. Zur Betätigung des Kolbens 4 steht der zweite Druckraum 8 mit einem zweiten Bereich 4b des Kolbens 4 in Wirkverbindung, hier mit einem zweiten Ende 4d des Kolbens 4, so dass über einen zweiten Druckanschluss 10 zugeführtes Hydraulikfluid auf das zweite Ende 4d des Kolbens 4 wirkt. Wie dies zu erkennen ist, wirkt der durch das Hydraulikfluid des zweiten Druckraums 8 erzeugte Druck im Sinne einer Bewegung des Kolbens 4 in entgegengesetzte Richtung in Bezug auf die Verschiebung des Kolbens 4 durch Hydraulikfluid im ersten Druckraum 7, mithin also in Rückstellrichtung.

Beim Einsatz der Abkoppelvorrichtung 100 sind beide Druckräume 7, 8 mit Fluid gefüllt und werden zwischen Gehäusedeckel 2, Gehäuseanbau 1a und Kolben 4 mittels Dichtringen 13, 14, welche hier ebenfalls als Nutdichtringe ausgebildet sind, abgedichtet. Der Arm 6, welcher einstückig mit dem Kolben 4 ausgebildet oder an diesem befestigt sein kann, ist in der gezeigten Ausführungsform in Bezug auf die Längsachse L mittig am Kolben 4 ausgeformt bzw. befestigt. Ein kolbenfernes Ende 6a des Armes 6 ist so ausgebildet, dass es eine kraft- und/oder formschlüssige Verbindung mit dem ersten Kugellager 15 bilden kann, und zwar an dessen radial äußerer Seite. Die radial innere Seite des Lagers 15 ist wiederum mit einer Klaue 17 verbunden, wobei je ein Sprengring 18, 19 das Kugellager 15 am Arm 6 bzw. an der Klaue 17 sichert.

Wird nun der Kolben 4 über den ersten Druckraum 7 und den ersten Druckanschluss 9 mit Druck beaufschlagt, so wird er in Achsrichtung in der Darstellung der Figur 2 nach rechts verschoben, wobei gleichzeitig aus dem zweiten Druckraum 8 über den zweiten Druckanschluss 10 das Hydraulikfluid entweicht. Über den Arm 6 und das erste Kugellager 15 wird die Bewegung des Kolbens 4 auf die Klaue 17 übertragen, so dass diese auf das Kupplungselement 11 drückt und entsprechend eine Kupplung, die mit dem Kupplungselement 11 in Verbindung steht, schließt.

Das Öffnen der Kupplung erfolgt dementsprechend in umgekehrter Reihenfolge. Ein Vorteil dieser Ausführungsform ist eine sehr genaue und präzise Ansteuerung (z.B. über eine elektrisch angesteuerte in der Figur nicht dargestellte Pumpe) der Abkoppelvorrichtung mit einer kurzen Stellgeschwindigkeit.

Auch bei dieser Ausführungsform kann das Gehäuse 1 oder der Gehäusedeckel 2 über ein zweites Kugellager 16 an der Antriebswelle 3 gelagert sein.

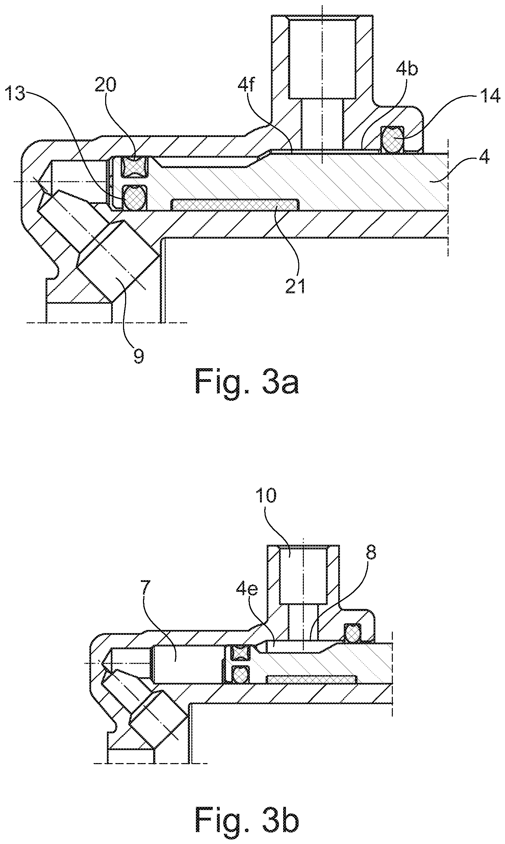

Mit Bezug auf die Figuren 3a und 3b wird nunmehr eine zweite Ausführungsform der Erfindung beschrieben, wobei die Darstellung der Figur 3a einen Öffnungszustand der Kupplung zeigt, wohingegen die Darstellung der Figur 3b einen geschlossenen Zustand der Kupplung veranschaulicht. Die Lagerung des Gehäuses 1 auf dem zweiten Kugellager 16 sowie der Arm 6 und seine Verbindung zu der Klaue 17 sind in diesen Figuren nicht dargestellt, können jedoch gleich oder ähnlich wie bei der ersten Ausführungsform ausgeführt sein. In den Detailansichten der Figuren 3a und 3b wird somit nur die Funktion des zweiseitig wirkenden Kolben 4 in der zweiten Ausführungsform dargestellt.

Wie dies zu erkennen ist, erfolgt die Druckbeaufschlagung des zweiten Bereichs 4b seitlich am Kolben 4, genauer ausgedrückt über eine Vertiefung 4e in einer Mantelfläche 4f des Kolbens 4 und nicht in Achsrichtung von dem zweiten Ende 4d aus, wie dies in der ersten Ausführungsform der Fall ist. Der Kolben 4 hat hier drei Dichtringe 13, 14, 20, wobei der erste Dichtring 13 eine A-Ringdichtung für eine innere Abdichtung zum ersten Druckraum 7 ist und der dritte Dichtring 20 ein X-Dichtungsring für die äußere Abdichtung zum ersten Druckraum 7 und zur gleichzeitigen inneren Abdichtung zum zweiten Druckraum 8 ist. Der äußeren Abdichtung am zweiten Druckraum 8 dient der zweite Dichtring 14, welcher als eine A-Ringdichtung ausgeführt ist, die im Gehäuse 1 platziert ist. Der dritte Dichtring 20 hat dabei eine Doppelfunktion. Prinzipiell sind aber auch andere Dichtungsbauarten geeignet.

Wird nun der erste Druckraum 7 über den ersten Druckanschluss 9 mit Druck beaufschlagt und der Kolben 4 in Achsrichtung nach rechts verschoben, sodass die Kupplung geschlossen wird, und gleichzeitig entweicht aus dem zweiten Druckraum 8 über den zweiten Druckanschluss 10 das Fluid. Umgekehrt wird zum Öffnen der Kupplung der zweite Druckraum 8 mit Druck beaufschlagt und der Kolben 4 in Axialrichtung nach links verschoben.

Ein Gleitband 21 soll in dieser Ausführungsform die präzise Axialführung des Kolbens 4 gewährleisten. Bei geeigneter Schmierung kann auf dieses aber auch verzichtet werden.

Die in den Ausführungsformen der Figuren 2 und 3 gezeigten Abkoppelvorrichtungen 100 können Teil eines jeweiligen Abkoppelsystems 1000 sein, welches neben den Abkoppelvorrichtungen 100 die Kugellager 15, 16 sowie die Klaue 17 umfassen kann. Sämtliche Kugellager 15, 16 können beispielsweise als Rillenkugellager ausgeführt sein.

### Bezugszeichenliste

1 Gehäuse
1a Gehäuseanbau
2 Gehäusedeckel
3 Antriebswelle
4 Kolben
4a erster Bereich
4b zweiter Bereich
4c erstes Ende
4d zweites Ende
4e Vertiefung
4f Mantelfläche
5 Feder
6 Arm
6a kolbenfernes Ende
7 erster Druckraum
8 zweiter Druckraum
9 erster Druckanschluss
10 zweiter Druckanschluss
11 Kupplungselement
12 unbewegliches Kupplungselement
13 erster Dichtring
14 zweiter Dichtring
15 erstes Kugellager
16 zweites Kugellager
17 Klaue
17a freies Ende
18 Sprengring
19 Sprengring
20 dritter Dichtring
21 Gleitband

## Patentansprüche

1. Abkoppelvorrichtung (100) für die Trennung eines Motors von einem Antriebsstrang, aufweisend einen Kolben (4), der in einem Gehäuse (1) parallel zu einer Längsachse L des Gehäuses (1) beweglich gelagert ist und der einen Arm (6) zur Betätigung mittelbaren oder unmittelbaren Betätigung eines Kupplungselements (11) aufweist, wobei ein erster Bereich (4a) des Kolbens (4) mit einem ersten Druckraum (7) in so Wirkverbindung steht, dass bei Beaufschlagung des ersten Druckraums (7) mit Druck der Kolben (4) in eine erste Richtung parallel zur Längsachse L verschoben wird, wobei ein zweiter Druckraum (8) vorhanden ist, welcher mit einem zweiten Bereich (4b) des Kolbens (4) so in Wirkverbindung steht, dass bei Beaufschlagung des zweiten Druckraums (8) mit Druck der Kolben (4) in eine zweite Richtung parallel zur Längsachse L verschoben wird, welche der ersten Richtung entgegengesetzt ist, und wobei der erste Bereich (4a) sich an einem ersten längsseitigen Ende (4c) des Kolbens (4) befindet und der zweite Bereich (4b) von einer Vertiefung (4e) in einer Mantelfläche (4f) des Kolbens (4) gebildet wird, **dadurch gekennzeichnet, dass** die Vertiefung (4e) auf einer radial in Bezug auf die Längsachse L gesehen äußeren Hälfte der Mantelfläche (4f) des Kolbens ausgebildet ist.

2. Abkoppelvorrichtung (100) nach Anspruch 1, **dadurch gekennzeichnet, dass** jeder der Druckräume (7, 8) mit jeweils einem Druckanschluss (9, 10) ausgestattet ist.

3. Abkoppelvorrichtung (100) nach Anspruch 1 oder 2, **dadurch gekennzeichnet, dass** der Kolben (4) als Ringkolben ausgebildet ist, welcher sich um die Längsachse L erstreckt.

4. Abkoppelsystem (1000), aufweisend eine Abkoppelvorrichtung (100) nach einem der vorstehenden Ansprüche sowie ein erstes Kugellager (15), das radial innerhalb des Kolbens (4) gelegen ist und auf dem der Arm (6) des Kolbens (4) gelagert ist.

5. Abkoppelsystem (1000) nach Anspruch 4, **dadurch gekennzeichnet, dass** es eine Klaue (17) aufweist, auf der das erste Kugellager (15) radial innen aufliegt und die dafür ausgelegt ist, mit einem freien Ende (17a) das Kupplungselement (11) zu betätigen.

6. Abkoppelsystem (1000) nach einem der Ansprüche 4oder 5, **dadurch gekennzeichnet, dass** es ein zweites Kugellager (16) aufweist, auf dem radial außen das Gehäuse (1) abgestützt ist.

## Claims

1. A decoupling device (100) for separating a motor from a drive train, comprising a piston (4), which is movably mounted in a housing (1) parallel to a longitudinal axis L of the housing (1) and which comprises an arm (6) for actuating the direct or indirect actuation of a coupling element (11), a first region (4a) of the piston (4) being operatively connected to a first pressure chamber (7) such that when pressure is applied to the first pressure chamber (7) the piston (4) is moved in a first direction parallel to the longitudinal axis L, a second pressure chamber (8) being present, which is operatively connected to a second region (4b) of the piston (4) such that when pressure is applied to the second pressure chamber (8) the piston (4) is moved in a second direction parallel to the longitudinal axis L, which is opposite the first direction, and the first region (4a) being located at a first longitudinal end (4c) of the piston (4) and the second region (4b) being established by a recess (4e) in a lateral surface (4f) of the piston (4), **characterised in that** the recess (4e) is formed on a radially outer half of the lateral surface (4f) of the piston when viewed in relation to the longitudinal axis L.

2. The decoupling device (100) according to claim 1, **characterised in that** each of the pressure chambers (7, 8) is equipped with one pressure connection (9, 10).

3. The decoupling device (100) according to claim 1 or 2, **characterised in that** the piston (4) is formed as an annular piston which extends about the longitudinal axis L.

4. The decoupling system (1000) comprising a decoupling device (100) according to any of the preceding claims and a first ball bearing (15) which is situated radially inside the piston (4) and on which the arm (6) of the piston (4) is mounted.

5. The decoupling system (1000) according to claim 4, **characterised in that** it comprises a claw (17) on which the first ball bearing (15) rests radially on the inside and which is configured to actuate the coupling element (11) with one free end (17a).

6. The decoupling system (1000) according to any of claims 4 or 5, **characterised in that** it comprises a second ball bearing (16) on which the housing (1) is supported radially on the outside.

## Revendications

1. Dispositif de découplage (100) destiné à séparer un moteur d'une chaîne cinématique, présentant un piston (4) qui est monté de manière mobile dans un boîtier (1) parallèle à un axe longitudinal L du boîtier (1) et qui présente un bras (6) pour l'actionnement direct ou indirect d'un élément d'accouplement (11), une première zone (4a) du piston (4) étant un liaison active avec une première chambre de pression (7), de façon que, lorsque la première chambre de pression (7) est soumise à une pression, le piston (4) soit déplacé dans une première direction parallèle à l'axe longitudinal L, une seconde chambre de pression (8) étant présente, laquelle est en liaison active avec une seconde zone (4b) du piston (4), de façon que, lorsque la seconde chambre de pression (8) est soumise à une pression, le piston (4) soit déplacé dans une seconde direction parallèle à l'axe longitudinal L, laquelle est opposée à la première direction, et la première zone (4a) se situant à une première extrémité longitudinale (4c) du piston (4) et la seconde zone (4b) étant formée par un évidement (4e) dans une surface latérale (4f) du piston (4), **caractérisé en ce que** l'évidement (4e) est formé sur une moitié extérieure de la surface latérale (4f) du piston, vue radialement par rapport à l'axe longitudinal L.

2. Dispositif de découplage (100) selon la revendication 1, **caractérisé en ce que** chacune des chambres de pression (7, 8) est respectivement équipée d'un raccord de pression (9, 10).

3. Dispositif de découplage (100) selon la revendication 1 ou 2, **caractérisé en ce que** le piston (4) est conçu comme un piston annulaire qui s'étend autour de l'axe longitudinal L.

4. Système de découplage (1000), présentant un dispositif de découplage (100) selon l'une quelconque des revendications précédentes et un premier roulement à billes (15) qui est situé radialement à l'intérieur du piston (4) et sur lequel est monté le bras (6) du piston (4).

5. Système de découplage (1000) selon la revendication 4, **caractérisé en ce qu'**il présente une griffe (17) sur laquelle le premier roulement à billes (15) repose radialement à l'intérieur, et qui est conçue pour actionner l'élément d'accouplement (11) avec une extrémité libre (17a).

6. Système de découplage (1000) selon l'une des revendications 4 ou 5, **caractérisé en ce qu'**il présente un second roulement à billes (16) sur lequel le boîtier (1) s'appuie radialement à l'extérieur.
